(19) Europäisches Patentamt
European Patent Office
Office européen des brevets

(11) **EP 4 557 873 A1**

(12) **EUROPEAN PATENT APPLICATION**
published in accordance with Art. 153(4) EPC

(43) Date of publication:
**21.05.2025 Bulletin 2025/21**

(21) Application number: **23868383.3**

(22) Date of filing: **04.08.2023**

(51) International Patent Classification (IPC):
$H04W\ 76/15^{(2018.01)}$     $H04W\ 28/02^{(2009.01)}$
$H04W\ 52/02^{(2009.01)}$     $H04W\ 4/80^{(2018.01)}$
$H04W\ 84/12^{(2009.01)}$     $H04W\ 88/06^{(2009.01)}$

(52) Cooperative Patent Classification (CPC):
H04W 4/80; H04W 28/02; H04W 52/02;
H04W 76/15; H04W 84/12; H04W 88/06

(86) International application number:
**PCT/KR2023/011451**

(87) International publication number:
**WO 2024/063323 (28.03.2024 Gazette 2024/13)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **23.09.2022 KR 20220120453**
            **20.12.2022 KR 20220179020**

(71) Applicant: **Samsung Electronics Co., Ltd.**
**Suwon-si, Gyeonggi-do 16677 (KR)**

(72) Inventors:
• **MIN, Hyunkee**
**Suwon-si, Gyeonggi-do 16677 (KR)**

• **PARK, Wonbin**
**Suwon-si, Gyeonggi-do 16677 (KR)**
• **YANG, Changmok**
**Suwon-si, Gyeonggi-do 16677 (KR)**
• **YUN, Jusik**
**Suwon-si, Gyeonggi-do 16677 (KR)**
• **CHOI, Seongsu**
**Suwon-si, Gyeonggi-do 16677 (KR)**
• **CHOI, Junsu**
**Suwon-si, Gyeonggi-do 16677 (KR)**
• **CHOI, Hyeonu**
**Suwon-si, Gyeonggi-do 16677 (KR)**

(74) Representative: **Gulde & Partner**
**Patent- und Rechtsanwaltskanzlei mbB**
**Berliner Freiheit 2**
**10785 Berlin (DE)**

(54) **ELECTRONIC DEVICE FOR SUPPORTING MULTI-LINK OPERATION, AND OPERATION METHOD THEREOF**

(57) An operation method of electronic devices (101, 210), according to an embodiment, may comprise an operation of executing a first application using first communication (201) that does not support a multi-link operation (MLO) and a second application using second communication (203) that supports the MLO. The operation method may comprise an operation of transmitting, on the basis of information regarding a plurality of links associated with the second communication (203), data associated with the second application via one or more first links from among the plurality of links. The operation method may comprise an operation of controlling, from among the first links, a second link including a frequency band overlapping an operating channel of the first communication (201).

```
                    ┌─────────┐
                    │  Start  │
                    └────┬────┘
                         │                           ┌─ 710
          ┌──────────────▼──────────────────────────┐
          │ Execute first application and second application │
          └──────────────┬──────────────────────────┘
                         │                           ┌─ 730
          ┌──────────────▼──────────────────────────┐
          │ Perform TID-to-link mapping based on information about second application │
          └──────────────┬──────────────────────────┘
                         │                           ┌─ 750
          ┌──────────────▼──────────────────────────┐
          │ Control link including bandwidth that overlaps operating channel of first communication │
          └──────────────┬──────────────────────────┘
                         │
                    ┌────▼────┐
                    │   End   │
                    └─────────┘
```

**FIG. 7**

EP 4 557 873 A1

## Description

### TECHNICAL FIELD

Embodiments relate to an electronic device supporting a multi-link operation (MLO) and an operating method thereof.

### BACKGROUND ART

Ultra-wideband (UWB) is a communication protocol that transmits, using an extremely short pulse, a signal at low power over a wide bandwidth. A UWB has been used primarily for military purposes but is now used in various fields.

For example, an impulse radio (IR)-UWB may accurately measure a time (e.g., a time of arrival (TOA)) for a pulse to reach a target or a time of flight (TOF). An IR-UWB may be used in technology fields such as radar, indoor navigation, asset tracking, location tracking, smart key services, and unmanned payment systems.

A wireless local area network (WLAN) refers to a network between a terminal and a hub that is built using a radio frequency (RF) or light in a limited space. A WLAN is also referred to as wireless fidelity (Wi-Fi). A terminal may perform WLAN communication using one or more bandwidths among 2.4 gigahertz (GHz), 5 GHz, and 6 GHz. Specifically, the Wi-Fi 7 (802.11be) standard supports a multi-link operation (MLO). A terminal and a hub supporting Wi-Fi 7 may perform WLAN communication using two or more bandwidths through an MLO.

### DISCLOSURE OF THE INVENTION

### TECHNICAL SOLUTIONS

According to an embodiment, an electronic device 101, 210 includes one or more wireless communication modules 192, 332, 334 configured to transmit and receive a wireless signal, one or more processors 120, 310 operatively connected to the wireless communication modules 192, 332, 334, and a memory electrically connected to the processors 120, 310 and including instructions executable by the processors 120, 310. When the instructions are executed by the processors 120, 310, the processors 120, 310 are configured to perform a plurality of operations, in which the plurality of operations includes executing a first application that uses first communication 201 not supporting a multi-link operation (MLO) and a second application that uses second communication 203 supporting an MLO. The plurality of operations includes, based on information about a plurality of links associated with the second communication 203, transmitting data associated with the second application through one or more first links among the plurality of links. The plurality of operations includes controlling, among the first links, a second link including a bandwidth overlapping an operating channel of the first communication 201.

According to an embodiment, an operating method of an electronic device 101, 210 includes executing a first application that uses first communication 201 not supporting an MLO and a second application that uses second communication 203 supporting an MLO. The operating method includes, based on information about a plurality of links associated with the second communication 203, transmitting data associated with the second application through one or more first links among the plurality of links. The operating method includes controlling, among the first links, a second link including a bandwidth overlapping an operating channel of the first communication 201.

### BRIEF DESCRIPTION OF DRAWINGS

FIG. 1 is a block diagram illustrating an electronic device in a network environment, according to an embodiment.
FIG. 2 is a diagram illustrating a network environment of an electronic device, according to an embodiment.
FIG. 3 is a schematic block diagram of an electronic device, according to an embodiment.
FIG. 4 is a diagram illustrating communication of an electronic device, according to an embodiment.
FIG. 5 is a diagram illustrating an operation of an electronic device for performing communication scheduling, according to an embodiment.
FIG. 6 is a diagram illustrating communication between electronic devices for supporting a multi-link operation (MLO), according to an embodiment.
FIG. 7 is a diagram illustrating an operating method of an electronic device, according to an embodiment.
FIG. 8 is a flowchart illustrating operations of communication service modules, according to an embodiment.
FIG. 9 is a flowchart illustrating an operation of an electronic device for determining whether a link allocation is possible, according to an embodiment.

FIG. 10 is a flowchart illustrating an operation of an electronic device for performing traffic identifier (TID)-to-link mapping, according to an embodiment.

FIG. 11 is a flowchart illustrating an operation of an electronic device for performing TID-to-link mapping, according to an embodiment.

FIG. 12 is a flowchart illustrating an operation of an electronic device for controlling a link, according to an embodiment.

FIG. 13 is a flowchart illustrating an operation of an electronic device for controlling a link, according to an embodiment.

FIG. 14 is a flowchart illustrating an operation of an electronic device for controlling a link, according to an embodiment.

FIG. 15 is a diagram illustrating an operating method of an electronic device, according to an embodiment.

FIG. 16 is a diagram illustrating an operating method of an electronic device, according to an embodiment.

FIG. 17 is a diagram illustrating an operating method of an electronic device, according to an embodiment.

FIG. 18 is a flowchart illustrating an operating method of an electronic device, according to an embodiment.

## BEST MODE FOR CARRYING OUT THE INVENTION

Hereinafter, embodiments will be described in detail with reference to the accompanying drawings. When describing the embodiments with reference to the accompanying drawings, like reference numerals refer to like elements and a repeated description related thereto will be omitted.

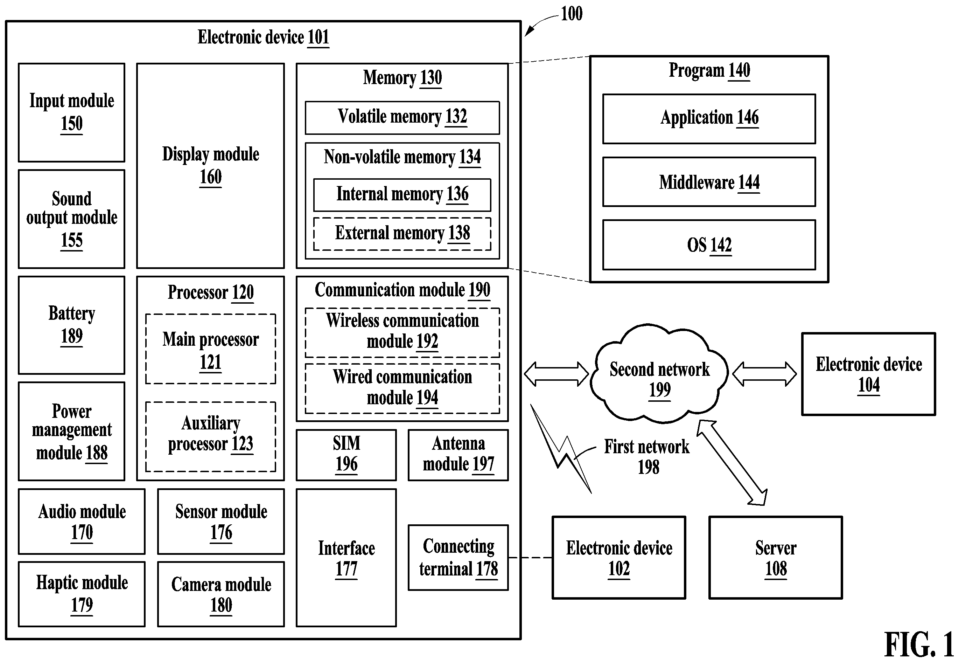

FIG. 1 is a block diagram illustrating an electronic device in a network environment, according to an embodiment.

Referring to FIG. 1, the electronic device 101 in the network environment 100 may communicate with an electronic device 102 via a first network 198 (e.g., a short-range wireless communication network), or communicate with at least one of an electronic device 104 and a server 108 via a second network 199 (e.g., a long-range wireless communication network). According to an embodiment, the electronic device 101 may communicate with the electronic device 104 via the server 108. According to an embodiment, the electronic device 101 may include a processor 120, a memory 130, an input module 150, a sound output module 155, a display module 160, an audio module 170, and a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added to the electronic device 101. In some embodiments, some of the components (e.g., the sensor module 176, the camera module 180, or the antenna module 197) may be integrated as a single component (e.g., the display module 160).

The processor 120 may execute, for example, software (e.g., a program 140) to control at least one other component (e.g., a hardware or software component) of the electronic device 101 connected to the processor 120 and may perform various data processing or computations. According to an embodiment, as at least a part of data processing or computations, the processor 120 may store a command or data received from another component (e.g., the sensor module 176 or the communication module 190) in a volatile memory 132, process the command or the data stored in the volatile memory 132, and store resulting data in a non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from or in conjunction with the main processor 121. For example, when the electronic device 101 includes the main processor 121 and the auxiliary processor 123, the auxiliary processor 123 may be adapted to consume less power than the main processor 121 or to be specific to a specified function. The auxiliary processor 123 may be implemented separately from the main processor 121 or as a part of the main processor 121.

The auxiliary processor 123 may control at least some of functions or states related to at least one (e.g., the display module 160, the sensor module 176, or the communication module 190) of the components of the electronic device 101, instead of the main processor 121 while the main processor 121 is in an inactive (e.g., sleep) state or along with the main processor 121 while the main processor 121 is an active state (e.g., executing an application). According to an embodiment, the auxiliary processor 123 (e.g., an ISP or a CP) may be implemented as a portion of another component (e.g., the camera module 180 or the communication module 190) that is functionally related to the auxiliary processor 123. According to an embodiment, the auxiliary processor 123 (e.g., an NPU) may include a hardware structure specifically for artificial intelligence model processing. An artificial intelligence model may be generated by machine learning. The machine learning may be performed by, for example, the electronic device 101, in which artificial intelligence is performed, or performed via a separate server (e.g., the server 108). Learning algorithms may include, but are not limited to, for example, supervised learning, unsupervised learning, semi-supervised learning, or reinforcement learning. The artificial intelligence (AI) model may include a plurality of artificial neural network layers. An artificial neural network may include, for example, a deep neural network (DNN), a convolutional neural network (CNN), a recurrent neural network (RNN), a restricted Boltzmann machine (RBM), a deep belief network (DBN), and a bidirectional recurrent deep neural network (BRDNN), a deep Q-network, or a combination of two or more thereof, but is not limited thereto. The AI model may additionally or alternatively include a software structure other than the hardware structure.

The memory 130 may store various pieces of data used by at least one component (e.g., the processor 120 or the sensor module 176) of the electronic device 101. The various pieces of data may include, for example, software (e.g., the program 140) and input data or output data for a command related thereto. The memory 130 may include the volatile memory 132 or the non-volatile memory 134.

The program 140 may be stored as software in the memory 130 and may include, for example, an operating system (OS) 142, middleware 144, or an application 146.

The input module 150 may receive, from outside (e.g., a user) the electronic device 101, a command or data to be used by another component (e.g., the processor 120) of the electronic device 101. The input module 150 may include, for example, a microphone, a mouse, a keyboard, a key (e.g., a button), or a digital pen (e.g., a stylus pen).

The sound output module 155 may output a sound signal to the outside of the electronic device 101. The sound output module 155 may include, for example, a speaker or a receiver. The speaker may be used for general purposes, such as playing multimedia or playing a recording. The receiver may be used to receive an incoming call. According to an embodiment, the receiver may be implemented separately from the speaker or as a part of the speaker.

The display module 160 may visually provide information to the outside (e.g., a user) of the electronic device 101. The display module 160 may include, for example, a control circuit for controlling a display, a hologram device, or a projector and control circuitry to control its corresponding one of the display, the hologram device, and the projector. According to an embodiment, the display module 160 may include a touch sensor adapted to detect a touch, or a pressure sensor adapted to measure the intensity of force of the touch.

The audio module 170 may convert sound into an electric signal or vice versa. According to an embodiment, the audio module 170 may obtain the sound via the input module 150 or output the sound via the sound output module 155 or an external electronic device (e.g., the electronic device 102, such as a speaker or headphones) directly or wirelessly connected to the electronic device 101.

The sensor module 176 may detect an operational state (e.g., power or temperature) of the electronic device 101 or an environmental state (e.g., a state of a user) external to the electronic device 101 and generate an electric signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used by the electronic device 101 to couple with the external electronic device (e.g., the electronic device 102) directly (e.g., by wire) or wirelessly. According to an embodiment, the interface 177 may include, for example, a high-definition multimedia interface (HDMI), a universal serial bus (USB) interface, a secure digital (SD) card interface, or an audio interface.

The connecting terminal 178 may include a connector via which the electronic device 101 may physically connect to an external electronic device (e.g., the electronic device 102). According to an embodiment, the connecting terminal 178 may include, for example, an HDMI connector, a USB connector, an SD card connector, or an audio connector (e.g., a headphones connector).

The haptic module 179 may convert an electric signal into a mechanical stimulus (e.g., a vibration or a movement) or an electrical stimulus, which may be recognized by a user via their tactile sensation or kinesthetic sensation. According to an embodiment, the haptic module 179 may include, for example, a motor, a piezoelectric element, or an electric stimulator.

The camera module 180 may capture a still image and moving images. According to an embodiment, the camera module 180 may include one or more lenses, image sensors, ISPs, and flashes.

The power management module 188 may manage power supplied to the electronic device 101. According to an embodiment, the power management module 188 may be implemented as, for example, at least a part of a power management integrated circuit (PMIC).

The battery 189 may supply power to at least one component of the electronic device 101. According to an embodiment, the battery 189 may include, for example, a primary cell, which is not rechargeable, a secondary cell, which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more CPs that are operable independently from the processor 120 (e.g., an AP) and that support direct (e.g., wired) communication or wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module, or a power line communication (PLC) module). A corresponding one of these communication modules may communicate with the external electronic device, for example, the electronic device 104, via the first network 198 (e.g., a short-range communication network, such as Bluetooth™, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., a LAN or a wide area network (WAN)). These various types of communication modules may be implemented as a single component (e.g., a single chip), or may be implemented as multiple components (e.g., multiple chips) separate from each other. The wireless communication module 192 may identify and authenticate the electronic device 101 in a communication network, such as the first network 198 or the second network 199, using subscriber information (e.g., international mobile subscriber identity (IMSI)) stored in the SIM 196.

The wireless communication module 192 may support a 5G network after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., a mmWave band) to achieve, e.g., a high data transmission rate. The wireless communication module 192 may support various technologies for securing performance on a high-frequency band, such as, e.g., beamforming, massive multiple-input and multiple-output (MIMO), full dimensional MIMO (FD-MIMO), an array antenna, analog beam-forming, or a large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element including a conductive material or a conductive pattern formed in or on a substrate (e.g., a printed circuit board (PCB)). According to an embodiment, the antenna module 197 may include a plurality of antennas (e.g., an antenna array). In such a case, at least one antenna appropriate for a communication scheme used in a communication network, such as the first network 198 or the second network 199, may be selected by, for example, the communication module 190 from the plurality of antennas. The signal or power may be transmitted or received between the communication module 190 and the external electronic device via the at least one selected antenna. According to an embodiment, another component (e.g., a radio frequency integrated circuit (RFIC)) other than the radiating element may be additionally formed as a part of the antenna module 197.

According to various embodiments, the antenna module 197 may form a mmWave antenna module. According to an embodiment, the mmWave antenna module may include a PCB, an RFIC on a first surface (e.g., the bottom surface) of the PCB, or adjacent to the first surface of the PCB and capable of supporting a designated high-frequency band (e.g., a mmWave band), and a plurality of antennas (e.g., array antennas) disposed on a second surface (e.g., the top or a side surface) of the PCB, or adjacent to the second surface of the PCB and capable of transmitting or receiving signals of the designated high-frequency band.

At least some of the above-described components may be coupled mutually and exchange signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device (e.g., the electronic device 104) via the server 108 coupled with the second network 199. Each of the external electronic devices (e.g., the electronic device 102 or 104) may be a device of the same type as or a different type from the electronic device 101. According to an embodiment, all or some of operations to be executed by the electronic device 101 may be executed by one or more external electronic devices (e.g., the electronic devices 102 and 104 and the server 108). For example, if the electronic device 101 needs to perform a function or a service automatically, or in response to a request from a user or another device, the electronic device 101, instead of, or in addition to, executing the function or the service, may request the one or more external electronic devices to perform at least part of the function or service. The one or more external electronic devices receiving the request may perform the at least part of the function or service, or an additional function or an additional service related to the request and may transfer a result of the performance to the electronic device 101. The electronic device 101 may provide the result, with or without further processing the result, as at least part of a response to the request. To that end, cloud computing, distributed computing, mobile edge computing (MEC), or client-server computing technology may be used, for example. The electronic device 101 may provide ultra low-latency services using, e.g., distributed computing or MEC. In an embodiment, the external electronic device (e.g., the electronic device 104) may include an Internet-of-things (IoT) device. The server 108 may be an intelligent server using machine learning and/or a neural network. According to an embodiment, the external electronic device (e.g., the electronic device 104) or the server 108 may be included in the second network 199. The electronic device 101 may be applied to intelligent services (e.g., a smart home, a smart city, a smart car, or healthcare) based on 5G communication technology or IoT-related technology.

The electronic device according to various embodiments may be one of various types of electronic devices. The electronic device may include, for example, a portable communication device (e.g., a smartphone), a computer device, a portable multimedia device, a portable medical device, a camera, a wearable device, or a home appliance device. According to an embodiment of the disclosure, the electronic device is not limited to those described above.

It should be understood that various embodiments of the present disclosure and the terms used therein are not intended to limit the technological features set forth herein to particular embodiments and include various changes, equivalents, or replacements for a corresponding embodiment. In connection with the description of the drawings, like reference numerals may be used for similar or related components. It is to be understood that a singular form of a noun corresponding to an item may include one or more of the things unless the relevant context clearly indicates otherwise. As used herein, "A or B", "at least one of A and B", "at least one of A or B", "A, B or C", "at least one of A, B and C", and "A, B, or C," each of which may include any one of the items listed together in the corresponding one of the phrases, or all possible combinations thereof. Terms such as "first", "second", or "first" or "second" may simply be used to distinguish the component from other components in question, and do not limit the components in other aspects (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., by wire), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., the internal memory 136 or the external memory 138) that is readable by a machine (e.g., the electronic device 101). For example, a processor (e.g., the processor 120) of the machine (e.g., the electronic device 101) may invoke at least one of the one or more instructions stored in the storage medium and execute it. This allows the machine to be operated to perform at least one function according to the at least one instruction invoked. The one or more instructions may include code generated by a compiler or code executable by an interpreter. The machine-readable storage medium may be provided in the form of a non-transitory storage medium. Here, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., a compact disc read-only memory (CD-ROM)), or be distributed (e.g., downloaded or uploaded) online via an application store (e.g., PlayStore™), or between two user devices (e.g., smartphones) directly. If distributed online, at least part of the computer program product may be temporarily generated or at least temporarily stored in the machine-readable storage medium, such as a memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

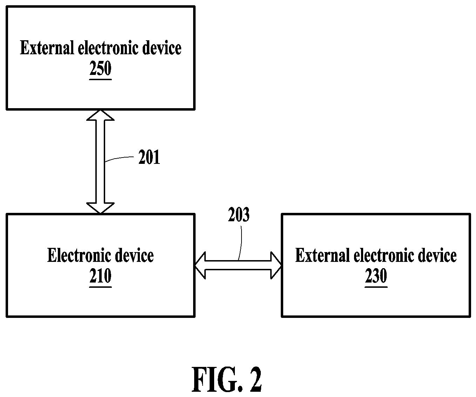

FIG. 2 is a diagram illustrating a network environment of an electronic device, according to an embodiment.

Referring to FIG. 2, according to an embodiment, an electronic device 210 (e.g., the electronic device 101 of FIG. 1) may perform first communication 201 with an external electronic device 250. The first communication 201 may include ultra-wideband (UWB), Bluetooth (BT), Bluetooth low energy (BLE), and/or ZigBee. The electronic device 210 may perform second communication 203 with an external electronic device 230 (e.g., an access point (AP)). The second communication 203 may include a wireless local area network (WLAN). The electronic device 210 may perform the first communication 201 and the second communication 203 in parallel. The bandwidth of a channel of the first communication 201 may overlap the bandwidth of a channel of the second communication 203. For example, in Table 1 below, the bandwidths of some channels (e.g., channel 5, channel 6, channel 7, and channel 8) of UWB may overlap the bandwidths of some channels of wireless fidelity (Wi-Fi).

[Table 1]

| Channel Number | Center Frequency (MHz) | Bandwidth |
|---|---|---|
| 1 | 3494.4 | 499.2 |
| 2 | 3993.6 | 499.2 |
| 3 | 4492.8 | 499.2 |
| 4 | 3993.6 | 1331.2 |
| 5 | 6489.6 | 499.2 |
| 6 | 6988.8 | 499.2 |
| 7 | 6489.6 | 1081.6 |
| 8 | 7488 | 499.2 |
| 9 | 7987.2 | 499.2 |

For example, the bandwidths of channels of BT, BLE, and/or Zigbee may overlap the bandwidths of some channels of Wi-Fi. When the bandwidths overlap each other, the first communication 201 and the second communication 203 may interfere with each other. The electronic device 210 may perform operations to reduce the interference.

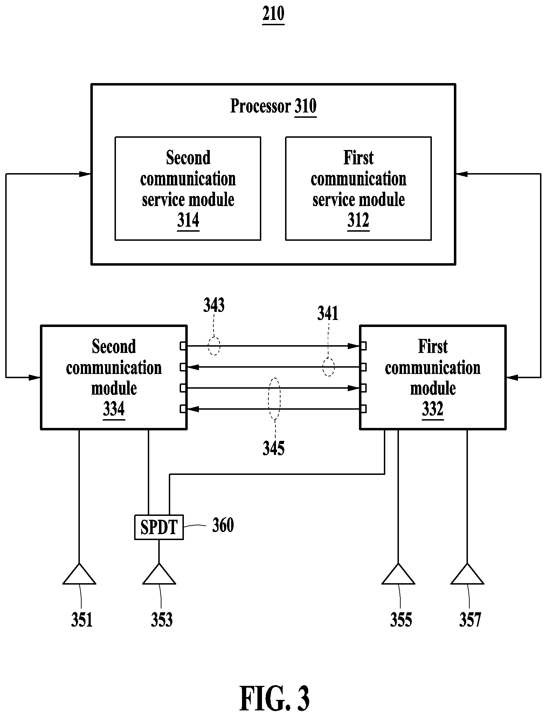

FIG. 3 is a schematic block diagram of an electronic device, according to an embodiment.

Referring to FIG. 3, according to an embodiment, the electronic device 210 may include a processor 310 (e.g., the processor 120 of FIG. 1), a first communication module 332 (e.g., the wireless communication module 192 of FIG. 1), a second communication module 334 (e.g., the wireless communication module 192 of FIG. 2), antennas 351 to 357, and a single pole double throw (SPDT) 360.

According to an embodiment, the processor 310 may include a first communication service module 312 and a second communication service module 314. The first communication service module 312 and the second communication service module 314 may be configured with one or more of program code including instructions that may be stored in a memory (e.g., the memory 130 of FIG. 1), an application, an algorithm routine, a set of instructions, or an artificial intelligence learning model.

According to an embodiment, the first communication service module 312 may include a UWB communication service module, a BT communication service module, a BLE communication service module, and/or a ZigBee communication service module. The first communication service module 312 may perform various operations for first communication (e.g., the first communication 201 of FIG. 2). For example, the first communication service module 312 may control the first communication module 332. The first communication service module 312 may obtain pieces of information (e.g., pieces of information such as an operation of an application, communication duration required for an application, and a communication interval) about an application that uses the first communication 201. The first communication service module 312 may determine an operating channel of the first communication 201. The first communication service module 312 may transmit, to the second communication service module 314, pieces of information (e.g., pieces of information such as an operating channel, duration of the first communication 201, an interval of the first communication 201, and information about a coexistence operation) related to the first communication 201.

According to an embodiment, the second communication service module 314 may include a Wi-Fi communication service module. The second communication service module 314 may perform various operations for second communication (e.g., the second communication 203 of FIG. 2). For example, the second communication service module 314 may control the second communication module 334. The second communication service module 314 may obtain pieces of information (e.g., pieces of information such as an operation of an application, a throughput required for an application, and latency required for an application) about an application that uses the second communication 203. The second communication service module 314 may transmit, to the first communication service module 312, pieces of information (e.g., information about a coexistence operation) related to the second communication.

According to an embodiment, the first communication module 332 may perform the first communication 201. The first communication module 332 may be controlled by the first communication service module 312. The first communication module 332 may transmit and receive the pieces of information to and from the second communication module 334 through general-purpose input/outputs (GPIOs) 341 and 343. The GPIOs 341 and 343 may transmit the pieces of information using a high and/or low state. The first communication module 332 may also transmit and receive the pieces of information to and from the second communication module 334 through a universal asynchronous receiver/transmitter (UART) 345 if needed.

According to an embodiment, the second communication module 334 may perform the second communication 203. The second communication module 334 may be controlled by the second communication service module 314. Like the first communication service module 312, the second communication module 334 may transmit and receive the pieces of information to and from the first communication service module 312 through the GPIOs 341 and 343 and/or the UART 345. Redundant descriptions are omitted herein.

According to an embodiment, the antennas 351 to 357 may transmit and/or receive an electromagnetic wave. The number of antennas 351 to 357 illustrated in FIG. 3 is an example for describing the electronic device 210 and not limited thereto.

According to an embodiment, the first communication module 332 and the second communication module 334 may share, using the SPDT 360, one or more antennas (e.g., the antenna 353) among the antennas 351 to 357. The first communication module 332 and the second communication module 334 may share the antennas 351 to 357 under the control of the communication service modules 312 and 314.

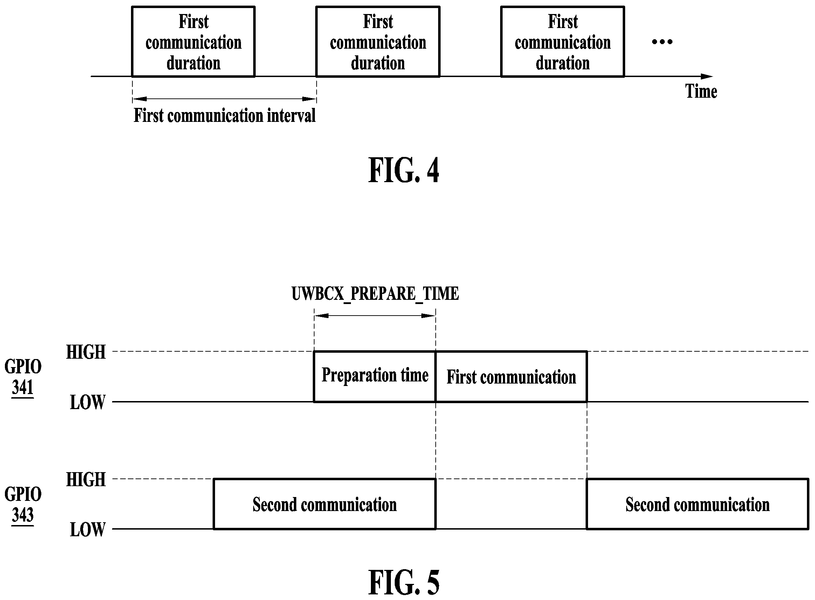

FIG. 4 is a diagram illustrating communication of an electronic device, according to an embodiment. FIG. 4 may be a diagram illustrating first communication (e.g., the first communication 201 of FIG. 2).

Referring to FIG. 4, according to an embodiment, an electronic device (e.g., the electronic device 210 of FIGS. 2 and 3) may execute an application (e.g., a smart key application) that uses the first communication 201. The first communication 201 may be performed with duration and/or an interval. The electronic device 210 may perform scheduling on the first communication 201 and second communication (e.g., the second communication 203 of FIG. 2) using the duration of the first communication 201 and the interval of the first communication 201.

FIG. 5 is a diagram illustrating an operation of an electronic device for performing communication scheduling, according to an embodiment. FIG. 5 may be a diagram illustrating an operation of an electronic device (e.g., the electronic device 210 of FIGS. 2 and 3) for scheduling pieces of communication (e.g., the first communication 201 and the second communication 203 of FIG. 2) using the GPIOs 341 and 343 (e.g., a high and/or low state of the GPIOs 341 and 343).

Referring to FIG. 5, according to an embodiment, a first communication module (e.g., the first communication module 332 of FIG. 3) may set the GPIO 341 as a high state before the first communication 201 is performed. For example, the first communication module 332 may set the GPIO 341 as a high state by considering a preparation time (e.g., UWBCX_PREPARE_TIME) for the first communication 201. The preparation time UWBCX_PREPARE_TIME may be determined based on the duration and/or interval of the first communication 201.

According to an embodiment, a second communication module (e.g., the second communication module 334 of FIG. 3) may stop the second communication 203 in the preparation time UWBCX_PREPARE_TIME from when the GPIO 341 is changed to a high state and may change the GPIO 343 to a low state.

According to an embodiment, the first communication module 332 may perform the first communication 201 based on the GPIOs 341 and 343 (e.g., a high and/or low state of the GPIOs 341 and 343). For example, the first communication module 332 may perform the first communication when the preparation time UWBCX_PREPARE_TIME elapses from when the GPIO 341 is changed to a high state. For example, the first communication module 332 may perform the first communication 201 when the GPIO 343 is changed to a low state. The first communication module 332 and the second communication module 334 may repeatedly perform the operations described above based on the duration of the first communication 201 and the interval of the first communication 201.

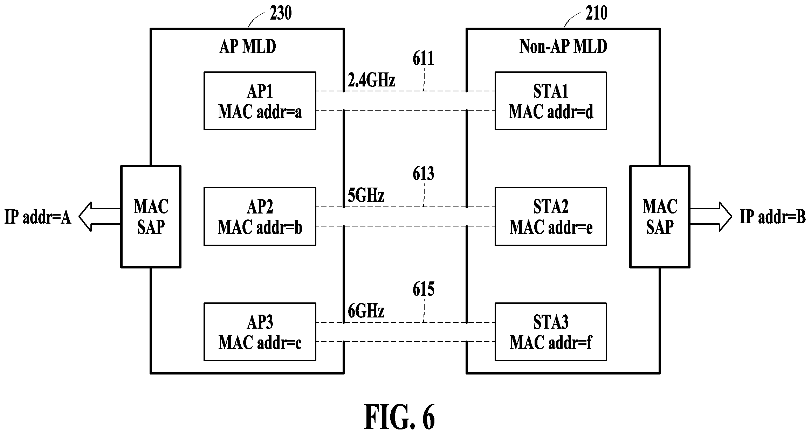

FIG. 6 is a diagram illustrating communication between electronic devices for supporting a multi-link operation (MLO), according to an embodiment.

Referring to FIG. 6, according to an embodiment, an electronic device (e.g., the electronic device 210 of FIGS. 2 and 3) and an external electronic device (e.g., the external electronic device 230 of FIG. 2) may be multi-link devices (MLDs) for supporting an MLO. The electronic device 210 may include a plurality of stations (STAs) STA1, STA2, and STA3 for a plurality of links 611 to 615. Each of the plurality of STAs STA1, STA2, and STA3 may independently perform the role of an STA. The electronic device 210 may have one representative media access control (MAC) address (e.g., P). Each of the plurality of STAs STA1, STA2, and STA3 may have different MAC addresses. The electronic device 210 may be connected to a logical link control (LLC) layer through an interface (e.g., a MAC service access point (SAP)).

According to an embodiment, the external electronic device 230 may include a plurality of APs AP1, AP2, and AP3 for the plurality of links 611 to 615. Each of the plurality of APs AP1, AP2, and AP3 may independently perform the role of an AP. The external electronic device 230 may have one representative MAC address (e.g., M). Each of the plurality of APs AP1, AP2, and AP3 may have different MAC addresses. The external electronic device 230 may be connected to an LLC layer through an interface (e.g., a MAC SAP).

According to an embodiment, the electronic device 210 and the external electronic device 230 may perform second communication (e.g., the second communication 203 of FIG. 2) using one or more of the plurality of links 611 to 615. The multi-link (ML) capability of the electronic device 210 and the external electronic device 203 may be negotiated through an ML setup. ML capability information may be transmitted by being included in a frame. The frame may include a beacon, a probe request and/or probe response, and/or an association request and/or association response. The plurality of links 611 to 615 may operate in different bandwidths. For example, a first link 611 may operate at 2.4 gigahertz (GHz), a second link 613 may operate at 5 GHz, and a third link 615 may operate at 6 GHz. As described above with reference to Table 1, depending on an operating channel of first communication (e.g., the first communication 201 of FIG. 2), interference may occur between the first communication 201 and the second communication 203. According to an embodiment, the electronic device 210 may perform operations for a coexistence operation of the first communication 201 and the second communication 203.

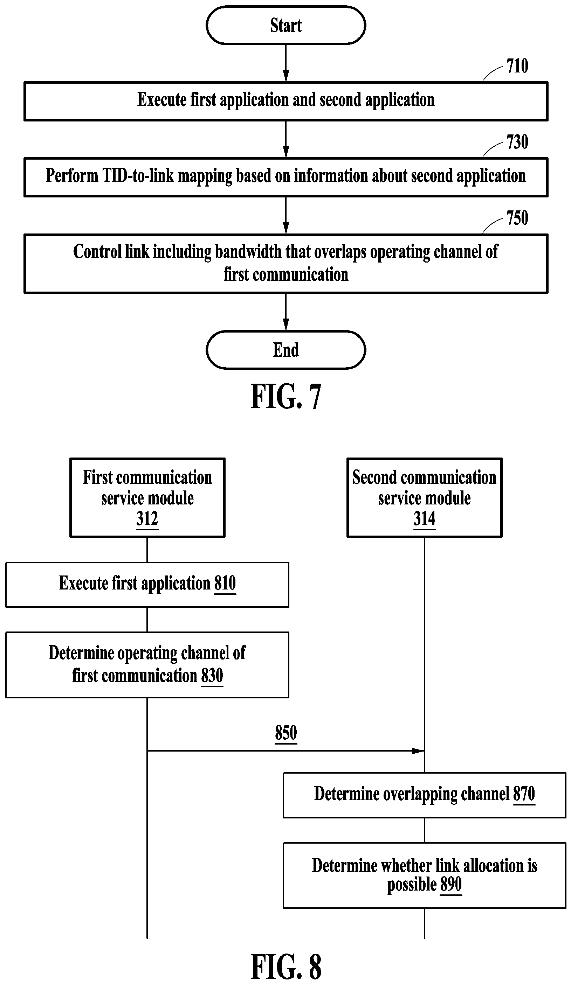

FIG. 7 is a diagram illustrating an operating method of an electronic device, according to an embodiment. FIG. 7 may be a flowchart illustrating an operation of an electronic device (e.g., the electronic device 210 of FIGS. 2, 3, and 6) for a coexistence operation of first communication (e.g., the first communication 201 of FIG. 2) and second communication (e.g., the second communication 203 of FIG. 2).

Referring to FIG. 7, according to an embodiment, operations 710 to 750 may be performed sequentially but are not limited thereto. For example, operations 730 and 750 may be performed in parallel.

In operation 710, the electronic device 210 may execute a first application and a second application. The first application may include an application that uses the first communication 201. The second application may include an application that uses the second communication 203. For example, the electronic device 210 may execute the second application while executing the first application and may execute the first application while executing the second application. The electronic device 210 may determine whether overlapping occurs between an operating channel of the first communication 201 and an operating channel of the second communication 203. An operation in which the electronic device 210 determines whether overlapping occurs between the channels is described in detail below with reference to FIG. 8.

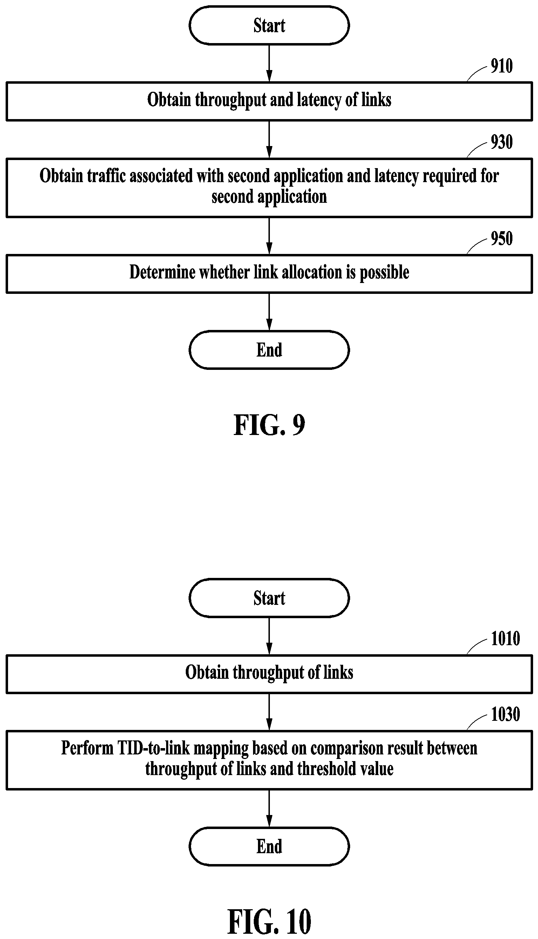

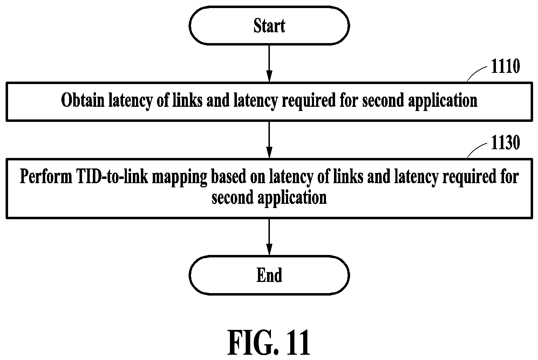

In operation 730, the electronic device 210 may transmit data associated with the second application through one or more of the plurality of links 611 to 615 based on information about a plurality of links (e.g., the links 611 to 615 of FIG. 6) associated with the second communication 203. For example, the electronic device 210 may perform TID-to-link mapping on the data associated with the second application based on the throughput of the plurality of links 611 to 615 and/or the latency of the plurality of links 611 to 615. An operation in which the electronic device 210 performs TID-to-link mapping is described in detail below with reference to FIGS. 10 and 11.

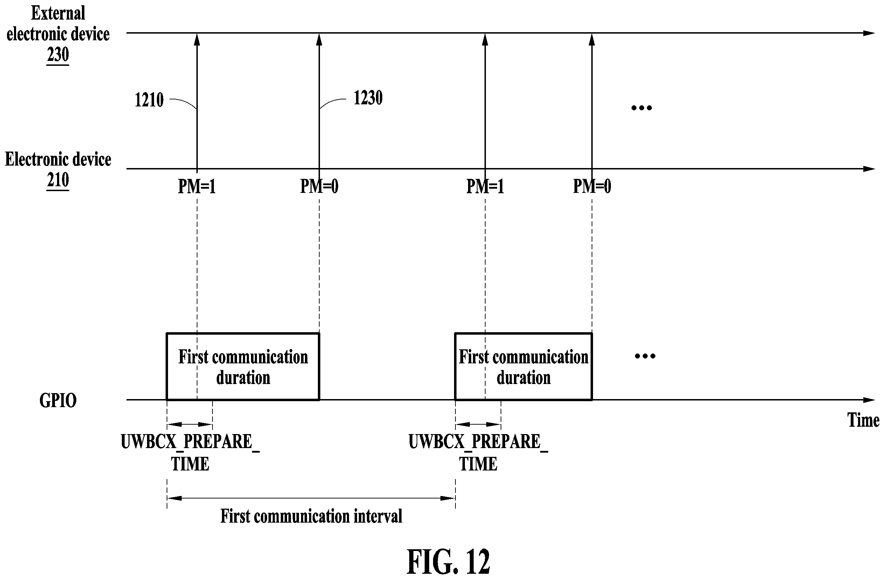

In operation 750, the electronic device 210 may control, among the plurality of links 611 to 615, a link including a channel (e.g., an overlapping channel) that overlaps the operating channel of the first communication 201. For example, when the first communication 201 includes UWB communication, the electronic device 210 may control a link (e.g., the third link 615 of FIG. 6). For example, when the first communication 201 includes BT, BLE, and/or ZigBee, the electronic device 210 may control a link (e.g., the first link 611 of FIG. 6). An operation in which the electronic device 210 controls a link is described in detail below with reference to FIGS. 12 to 14.

According to an embodiment, when the first application that uses the first communication 201 and the second application that uses the second communication 203 are executed in parallel, the electronic device 210 may improve the quality of the first communication 201 and the second communication 203 by performing the control on an ML.

FIG. 8 is a flowchart illustrating operations of communication service modules, according to an embodiment.

Referring to FIG. 8, according to an embodiment, operations 810 to 850 may be performed sequentially but are not limited thereto. For example, two or more operations may be performed in parallel.

In operation 810, the first communication service module 312 may execute a first application. Alternatively, the first communication service module 312 may verify the execution of the first application. The first application may include an application that uses first communication (e.g., the first communication 201 of FIG. 2).

In operation 830, the first communication service module 312 may determine an operating channel of the first communication 201. The operating channel of the first communication 201 may be determined based on the regulations of countries and/or the type of the first application. For example, in some countries, the use of bandwidths of one or more channels of the first communication 201 may be prohibited. For example, when the first application includes a location tracking application, a channel with a low bandwidth (e.g., channel 5) may be selected as the operating channel.

In operation 850, the first communication service module 312 may transmit, to the second communication service module 314, a frame including pieces of information. The frame may include bit information representing a request for a coexistence operation of the first communication 201 and second communication (e.g., the second communication 203 of FIG. 2), bit information representing the termination of the coexistence operation, information of the operating channel of the first communication 201, duration of the first communication 201, and/or an interval of the first communication 201. The bit information may represent a request for the coexistence operation when the bit is 1 and may represent the termination of the coexistence operation when the bit is 0, but embodiments are not limited thereto. According to an embodiment, the first communication service module 312 may obtain the duration of the first communication 201 and/or the interval of the first communication 201 in various ways. For example, the first communication service module 312 may obtain the duration of the first communication 201 and/or the interval of the first communication 201 from the information included in the first application. For example, the first communication service module 312 may determine the duration of the first communication 201 and/or the interval of the first communication 201 based on the type of the first application.

In operation 870, when the first application and a second application (e.g., an application that uses the second communication 203) are being performed in parallel, the second communication service module 314 may determine a channel (e.g., an overlapping channel) of the second communication 203 overlapping the operating channel of the first communication 201. The overlapping channel may be determined based on the bandwidth of the channel. For example, the second communication service module 314 may determine the channel of the second communication 203 that directly overlaps the bandwidth of the operating channel of the first communication 201 to be the overlapping channel. For example, when the first communication 201 includes UWB communication and an operating channel of the UWB communication is channel 5, channels 33 to 189 may be overlapping channels among the channels of the second communication 203 (e.g., Wi-Fi communication). For example, the second communication service module 314 may determine the overlapping channel based on the degree of interference between the first communication 201 and the second communication 203. For example, the second communication service module 314 may determine only some of the channels of the second communication 203 that directly overlap the bandwidth of the operating channel of the first communication 201 to be the overlapping channels based on the degree of interference. For example, the second communication service module 314 may determine channels of the second communication 203 that do not directly overlap the bandwidth of the operating channel of the first communication 201 to be the overlapping channels based on the degree of interference.

In operation 890, the second communication service module 314 may determine whether a link allocation is possible for the second communication 203 associated with the second application based on pieces of information. The pieces of information may include the throughput of links (e.g., the links 611 to 615 of FIG. 6), the latency of the links 611 to 615, the traffic associated with the second application, and/or the latency required for the second application. An operation in which the electronic device 210 determines whether a link allocation is possible is described in detail below with reference to FIG. 9.

FIG. 9 is a flowchart illustrating an operation of an electronic device for determining whether a link allocation is possible, according to an embodiment. FIG. 9 may be a flowchart illustrating an operation of an electronic device (e.g., the electronic device 210 of FIGS. 2, 3, and 6) for determining whether a link allocation is possible for second communication (e.g., the second communication 203 of FIG. 2).

Referring to FIG. 9, according to an embodiment, operations 910 to 950 may be performed sequentially but are not limited thereto. For example, the order of operations 910 and 930 may be changed. For example, operations 910 and 930 may be performed in parallel.

In operation 910, the electronic device 210 may obtain the throughput of links (e.g., the links 611 to 615 of FIG. 6) and the latency of the links. According to an embodiment, the electronic device 210 may obtain various pieces of information through an ML setup. The pieces of information may include the maximum number of links of an external electronic device (e.g., the external electronic device 230 of FIGS. 2 and 6) and/or information about links on which the ML setup is performed. The information about the links on which the ML setup is performed may include a received signal strength indicator (RSSI), a signal-to-noise ratio (SNR), a bandwidth, a link speed, channel utilization, and/or latency. The electronic device 210 may estimate the throughput of the links on which the ML setup is performed based on the pieces of information obtained through the ML setup. The electronic device 210 may obtain, through a scan, pieces of information (e.g., pieces of information such as an RSSI and channel utilization) about links on which the ML setup is not performed. The electronic device 210 may estimate the throughput and/or latency of the links on which the ML setup is not performed based on the pieces of information obtained through a scan. The electronic device 210 may record and manage the pieces of information about the links 611 to 615 as shown in the Table below.

[Table 2]

|  | ML Setup | Throughput | Latency |
|---|---|---|---|
| First Link | 0 | T1 | L1 |
| Second Link | 1 | T2 | L2 |
| Third Link | 1 | T3 | L3 |

In the Table above, the ML setup may indicate whether the ML setup is performed on each of the links 611 to 615. The throughput may represent the maximum throughput that the links 611 to 615 may support. The latency may be an average value of measured values or may be an estimated value based on the pieces of information.

According to an embodiment, the electronic device 210 may correct the throughput and/or latency of a link (e.g., one or more of the links 611 to 615) including a channel (e.g., an overlapping channel) that overlaps an operating channel of first communication (e.g., the first communication 201 of FIG. 2). The correction may be based on the duration of the first communication 201 and/or the interval of the first communication 201. For example, the correction may be performed as shown in the Equation below.

[Equation 1]

$$Tc = Te \cdot \times \frac{Td1}{Ti1}, \ \ Lc = Le + Td1$$

In the Equation above, Tc denotes a corrected throughput, Te denotes an estimated throughput (e.g., T1 to T3) before correction, Td1 denotes the duration of the first communication 201, Ti1 denotes the interval of the first communication 201, Lc denotes corrected latency, and Le denotes estimated latency before correction.

According to an embodiment, the electronic device 210 may estimate the throughput and latency of a combination of two or more of the links 611 to 615. The throughput of a combination of links may be estimated based on the throughputs of the links included in the combination. For example, the throughput of a combination of links may be the same as the sum of the throughputs of the links included in the combination. The latency of a combination of links may be estimated based on the latencies of the links included in the combination. For example, the latency of a combination of links may be less than the least latency among the latencies of the links included in the combination.

In operation 930, the electronic device 210 may obtain the traffic associated with a second application (e.g., an application that uses the second communication 203) and the latency required for the second application. The traffic associated with the second application may be obtained from a traffic characteristic of the second communication 203. The electronic device 210 may obtain the traffic characteristic of the second communication 203. The traffic characteristic of the second communication 203 may include the traffic, the latency required for the second application, and/or an access category (e.g., voice, videos, best efforts, backgrounds) corresponding to the second application. The traffic may include the amount of Tx data per unit time and/or the amount of Rx data per unit time. The electronic device 210 may obtain the latency required for the second application in various ways. For example, the electronic device 210 may obtain the latency required for the second application from information included in the second application. For example, the electronic device 210 may estimate the access category corresponding to the second application based on a pattern of the traffic associated with the second application. The electronic device 210 may obtain the latency required for the second application based on the access category corresponding to the second application. For example, the electronic device 210 may estimate the access category corresponding to the second application based on a time traffic identifier (TID) setting. The second communication service module 314 may estimate the latency required for the second application based on the access category corresponding to the second application.

In operation 950, the electronic device 210 may determine whether a link allocation is possible for the second communication 203 based on pieces of information. The pieces of information may include the throughput of links (e.g., the links 611 to 615 of FIG. 6), the latency of the links 611 to 615, the traffic associated with the second application, and/or the latency required for the second application. The electronic device 210 may determine that the link allocation is possible when a link and/or a combination of links satisfies the quality of service (QoS) of the second application. For example, the electronic device 210 may determine that the link allocation is possible when there is a link or a combination of links that satisfies the traffic (e.g., the traffic obtained from operation 930) associated with the second application. For example, the electronic device 210 may determine whether the link allocation is possible by comparing the throughput of each link or the throughput of a combination of links with the traffic associated with the second application. For example, the electronic device 210 may determine that the link allocation is possible when there is a link or a combination of links that satisfies the latency (e.g., the latency obtained from operation 930) required for the second application. For example, the electronic device 210 may determine whether the link allocation is possible by comparing the latency of each link or the latency of a combination of links with the latency required for the second application. For example, the electronic device 210 may also determine that the link allocation is possible when there is a link or a combination of links that satisfies the traffic associated with the second application and the latency required for the second application.

FIG. 10 is a flowchart illustrating an operation of an electronic device for performing TID-to-link mapping, according to an embodiment.

Referring to FIG. 10, according to an embodiment, operations 1010 and 1030 may be performed sequentially but are not limited thereto. For example, operations 1010 and 1030 may be performed in parallel.

In operation 1010, the electronic device 210 may obtain the throughput of links (e.g., the links 611 to 615 of FIG. 6). The operation in which the electronic device 210 obtains the throughput of the links 611 to 615 may be substantially the same as operation 910 of the electronic device 210 described above with reference to FIG. 9.

In operation 1030, the electronic device 210 may perform TID-to-link mapping based on the throughput (e.g., the throughput obtained from operation 1010) of the links 611 to 615. TID-to-link mapping may be a protocol that maps a TID to one or more of the links 611 to 615 regarding an uplink (UL) and/or a downlink (DL). TID-to-link mapping may be supported by Wi-Fi 7. The electronic device 210 may perform TID-to-link mapping by transmitting a request frame (e.g., an (Re) association request and/or a TID-to-link mapping request) to an external electronic device (e.g., the external electronic device 230 of FIGS. 2 and 6) and receiving a response frame (e.g., an (Re)association response and a TID-to-link mapping response) from the external electronic device 230. According to an embodiment, the electronic device 210 may map one or more TIDs (e.g., TID 0 to TID 3) to two or more of the links 611 to 615 when the throughput of the links 611 to 615 is less than a threshold value. For example, the electronic device 210 may map one or more TIDs (e.g., TID 0 to TID 3) to one of the links 611 to 615, which has a throughput that is greater than the threshold value. For example, when there are two or more of the links 611 to 615, which have a throughput that is greater than the threshold value, the electronic device 210 may map one or more TIDs to one of the two or more links, which has a higher throughput.

According to an embodiment, the electronic device 210 may improve the quality of communication (e.g., the second communication 203 of FIG. 2) by mapping one or more TIDs to one or more links based on the throughput of the links 611 to 615.

FIG. 11 is a flowchart illustrating an operation of an electronic device for performing TID-to-link mapping, according to an embodiment.

Referring to FIG. 11, according to an embodiment, operations 1110 and 1130 may be performed sequentially but are not limited thereto. For example, operations 1110 and 1130 may be performed in parallel.

In operation 1110, the electronic device 210 may obtain the latency of links (e.g., the links 611 to 615 of FIG. 6) and/or the latency required for a second application. The second application may include an application that uses second communication (e.g., the second communication 203 of FIG. 2). The operation in which the electronic device 210 obtains the latency of the links 611 to 615 may be substantially the same as operation 910 of the electronic device 210 described above with reference to FIG. 9. The operation in which the electronic device 210 obtains the latency required for the second application may be substantially the same as operation 930 of the electronic device 210 described above with reference to FIG. 9. Accordingly, a repeated description thereof is omitted.

In operation 1130, the electronic device 210 may perform TID-to-link mapping based on the latency of the links 611 to 615 (e.g., the latency of the links obtained from operation 1110) and the latency required for the second application (e.g., the latency required for the second application obtained from operation 1110). For example, the electronic device 210 may perform TID-to-link mapping based on the comparison result between the latency of each link and the latency required for the second application. For example, when the throughput (e.g., the corrected throughput of Equation 1) of a link (e.g., one or more of the links 611 to 615) including a channel (e.g., an overlapping channel) that overlaps an operating channel of first communication (e.g., the first communication 201 of FIG. 2) does not satisfy the latency required for the second application, the electronic device 210 may map one or more TIDs (e.g., TID 4 to TID 7) to a link that does not include the channel overlapping the operating channel of the first communication 201. For example, when the first communication 201 includes UWB communication and the throughput (e.g., the corrected throughput of Equation 1) of the third link 615 does not satisfy the latency required for the second application, the electronic device 210 may map one or more TIDs (e.g., TID 4 to TID 7) to the first link 611 or the second link 613. According to an embodiment, the electronic device 210 may perform, among the links 611 to 615, an ML re-association on a link on which an ML setup is not performed to perform TID-to-link mapping. According to an embodiment, the electronic device 210 may change, among the links 611 to 615, the state of a link in a sleep mode to a wake-up mode to perform TID-to-link mapping.

According to an embodiment, the electronic device 210 may improve the quality of communication (e.g., the second communication 203) by mapping a latency-sensitive frame (e.g., TID 4 to TID 7) to one link based on the latency of the links 611 to 615.

FIG. 12 is a flowchart illustrating an operation of an electronic device for controlling a link, according to an embodiment. FIG. 12 may be a flowchart illustrating an operation of the electronic device 210 for performing power management of a link (e.g., one or more of the links 611 to 615 of FIG. 6) including a channel (e.g., an overlapping channel) that overlaps an operating channel of first communication (e.g., the first communication 201 of FIG. 2).

Referring to FIG. 12, in operation 1210, the electronic device 210 may transmit, to the external electronic device 230, a first frame (e.g., a data null frame) to control the link including the overlapping channel. The electronic device 210 may transmit the first frame based on a GPIO (e.g., the GPIO 341 of FIG. 3) associated with the state of the first communication 201. As described above with reference to FIG. 5, the electronic device 210 may change the GPIO 341 to a high state before the preparation time UWBCX_PREPARE_TIME from an initiation time (e.g., an initiation time of occupancy regarding a radio frequency (RF)) of the first communication 201. The preparation time UWBCX_PREPARE_TIME may be determined based on the duration of the first communication 201 and/or the interval of the first communication 201. The electronic device 210 may transmit the first frame to the external electronic device 230 from when the GPIO 341 is changed to a high state until the first communication 201 is initiated. The first frame may include information (e.g., a PM bit) for power management of the link including the overlapping channel. For example, the electronic device 210 may transmit the first frame including the PM bit, which has a value of 1, to the external electronic device 230. The external electronic device 230 may receive the first frame and change the link including the overlapping channel to a sleep mode. For example, when the first communication 201 includes UWB communication, the external electronic device 230 may change the link 615 to a sleep mode. For example, when the first communication 201 includes BT, BLE, and/or Zigbee, the external electronic device 230 may change the link 611 to a sleep mode.

In operation 1230, the electronic device 210 may transmit a second frame to control the link including the overlapping channel. The electronic device 210 may transmit the second frame (e.g., a data null frame) based on the GPIO 341. The electronic device 210 may change the GPIO 341 to a low state immediately after the first communication 201 is terminated. When the GPIO 341 is changed to a low state, the electronic device 210 may transmit the second frame to the external electronic device 230. The second frame may include information (e.g., a PM bit) for power management of the link including the overlapping channel. For example, the electronic device 210 may transmit the second frame including the PM bit, which has a value of 0, to the external electronic device 230. The external electronic device 230 may receive the second frame and change the link including the overlapping channel to a wake-up mode. For example, when the first communication 201 includes UWB communication, the external electronic device 230 may change the link 615 to a wake-up mode. For example, when the first communication 201 includes BT, BLE, and/or Zigbee, the external electronic device 230 may change the link 611 to a wake-up mode.

According to an embodiment, the electronic device 210 may reduce interference due to a coexistence operation of the first communication 201 and the second communication 203 by transmitting, to the external electronic device 230, a frame including information for power management of the link including the overlapping channel.

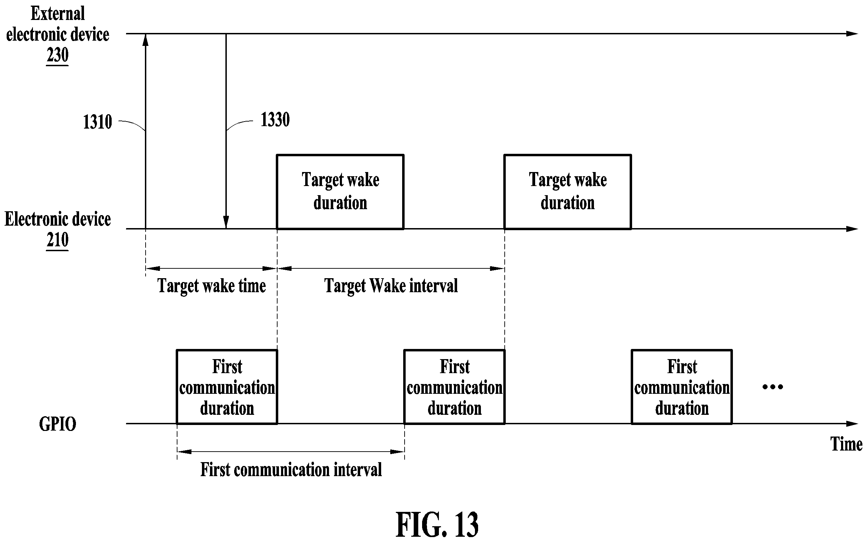

FIG. 13 is a flowchart illustrating an operation of an electronic device for controlling a link, according to an embodiment. FIG. 13 may be a flowchart illustrating an operation of the electronic device 210 for controlling a link (e.g., one or more of the links 611 to 615 of FIG. 6) including a channel (e.g., an overlapping channel) that overlaps an operating channel of first communication (e.g., the first communication 201 of FIG. 2) through time-wake-time (TWT) control.

In operation 1310, the electronic device 210 may transmit a TWT request frame to control the link including the overlapping channel. The TWT request frame may include a first parameter (e.g., a target wake time), a second parameter (e.g., a target wake interval), and/or a third parameter (e.g., target wake duration). The first parameter may relate to the initiation time of a TWT service. The second parameter may relate to the cycle of a TWT service. The third parameter may relate to the duration of a TWT service. According to an embodiment, the electronic device 210 may set the first parameter to the third parameter based on a time synchronization function (TSF) value of a second communication module (e.g., the second communication module 334 of FIG. 3). The electronic device 210 may obtain the TSF value of the second communication module 334 based on a time point at which a GPIO (e.g., the GPIO 341 of FIG. 3) is changed to a high and/or low state. As described above with reference to FIGS. 5 and 12, the time point at which the GPIO 341 is changed to a high and/or low state may be determined based on the duration of the first communication 201 and the interval of the first communication 201.

In operation 1330, the electronic device 210 may receive, from the external electronic device 230, a TWT response frame to the TWT request frame. The TWT response frame may include a response (e.g., acceptance or rejection) of the external electronic device 230 to parameters (e.g., the first parameter to the third parameter) included in the TWT request frame.

According to an embodiment, the electronic device 210 may reduce interference due to a coexistence operation of the first communication 201 and the second communication 203 by transmitting the TWT parameters to the external electronic device 230.

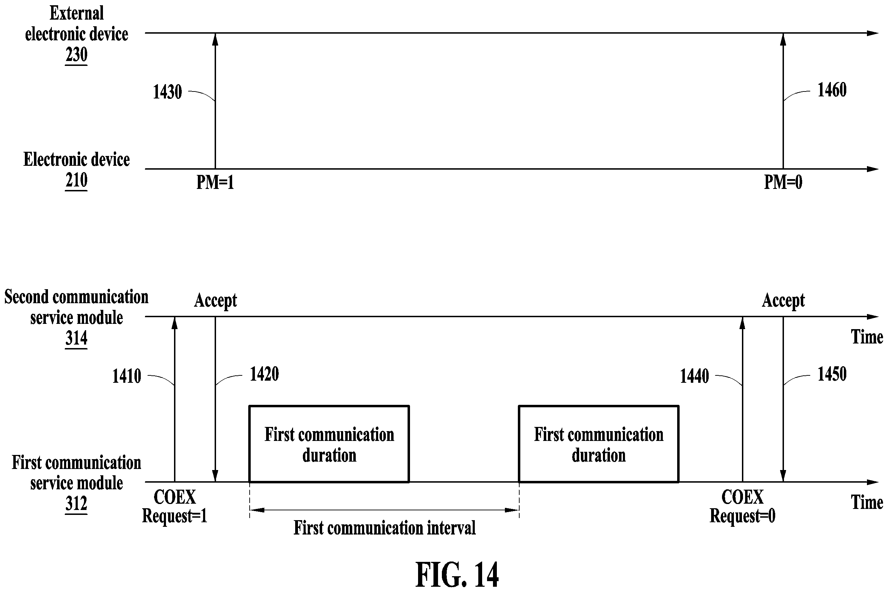

FIG. 14 is a flowchart illustrating an operation of an electronic device for controlling a link, according to an embodiment. FIG. 14 may be a flowchart illustrating an operation of the electronic device 210 for performing power management of a link (e.g., one or more of the links 611 to 615 of FIG. 6) including a channel (e.g., an overlapping channel) that overlaps an operating channel of first communication (e.g., the first communication 201 of FIG. 2).

Referring to FIG. 14, in operation 1410, the first communication service module 312 may transmit, to the second communication service module 314, a first frame including bit information (e.g., COEX Request=1) representing a request for a coexistence operation. For example, when a first application that uses the first communication 201 is executed, the first communication service module 312 may transmit the first frame to the second communication service module 314. The second communication service module 314 may receive the first frame and determine whether the coexistence operation of the first communication 201 and second communication (e.g., the second communication 203 of FIG. 2) is possible.

In operation 1420, when the coexistence operation of the first communication 201 and the second communication 203 is possible, the second communication service module 314 may transmit, to the first communication service module 312, a second frame accepting the request for the coexistence operation.

In operation 1430, when the second frame is transmitted, the electronic device 210 may transmit, to the external electronic device 230, a third frame (e.g., a data null frame) to control the link including the overlapping channel. The external electronic device 230 may receive the third frame and change the state of the link including the overlapping channel to a sleep mode.

In operation 1440, the first communication service module 312 may transmit, to the second communication service module 314, a fourth frame including the bit information (e.g., COEX Request=0) representing the termination of the coexistence operation. For example, when the first application is terminated, the first communication service module 312 may transmit the fourth frame to the second communication service module 314.

In operation 1450, the second communication service module 314 may transmit, to the first communication service module 312, a fifth frame accepting the termination of the coexistence operation.

In operation 1460, when the fifth frame is transmitted, the electronic device 210 may transmit, to the external electronic device 230, the third frame (e.g., the data null frame) to control the link including the overlapping channel. The external electronic device 230 may receive the fifth frame and change the state of the link including the overlapping channel to a wake-up mode.

According to an embodiment, the electronic device 210 may reduce interference due to the coexistence operation of the first communication 201 and the second communication 203 by performing operations of changing the state of the link including the overlapping channel to a sleep mode while the first communication 210 is performed.

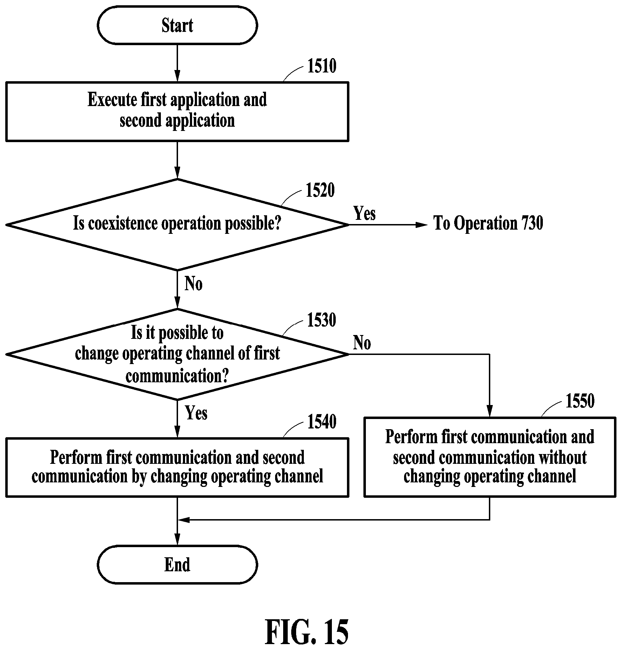

FIG. 15 is a diagram illustrating an operating method of an electronic device, according to an embodiment. FIG. 15 may be a diagram illustrating an operation of an electronic device (e.g., the electronic device 210 of FIGS. 2, 3, and 6) when a coexistence operation of second communication (e.g., the second communication 203 of FIG. 2) is impossible in a channel (e.g., an overlapping channel) that overlaps an operating channel of first communication (e.g., the first communication 201 of FIG. 2).

Referring to FIG. 15, according to an embodiment, operations 1510 to 1550 may be performed sequentially but are not limited thereto. For example, two or more operations may be performed in parallel.

In operation 1510, the electronic device 210 may execute a first application and a second application. The first application may include an application that uses the first communication 201. The second application may include an application that uses the second communication 203. Operation 1510 may be substantially the same as operation 710 of FIG. 7. Accordingly, a repeated description thereof is omitted.

In operation 1520, the electronic device 210 may determine whether the coexistence operation of the first communication 201 and the second communication 203 is possible in the overlapping channel. The electronic device 210 may determine whether the coexistence operation is possible based on the first application, the second application, and/or the traffic. For example, the electronic device 210 may determine whether the coexistence operation is possible based on the comparison result between the latency required for the second application and the duration of the first communication 201. The electronic device 210 may perform TID-to-link mapping (e.g., operation 730 of FIG. 7) when the coexistence operation is possible.

In operation 1530, when the coexistence operation is impossible, the electronic device 210 may determine whether the operating channel of the first communication 201 is capable of being changed.

In operation 1540, when it is possible to change the operating channel of the first communication 201, the electronic device 210 may change the operating channel of the first communication 201 and perform the first communication 201 and the second communication 203.

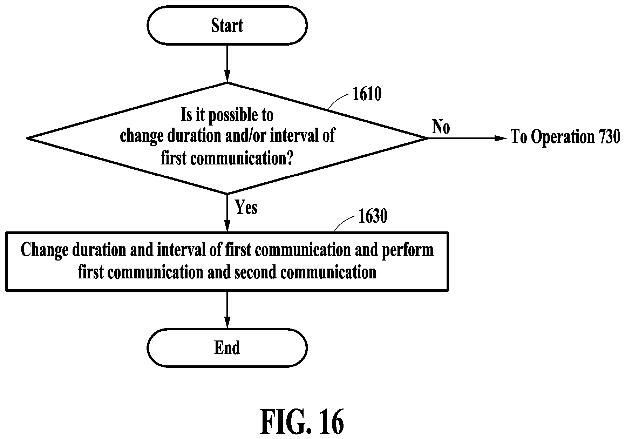

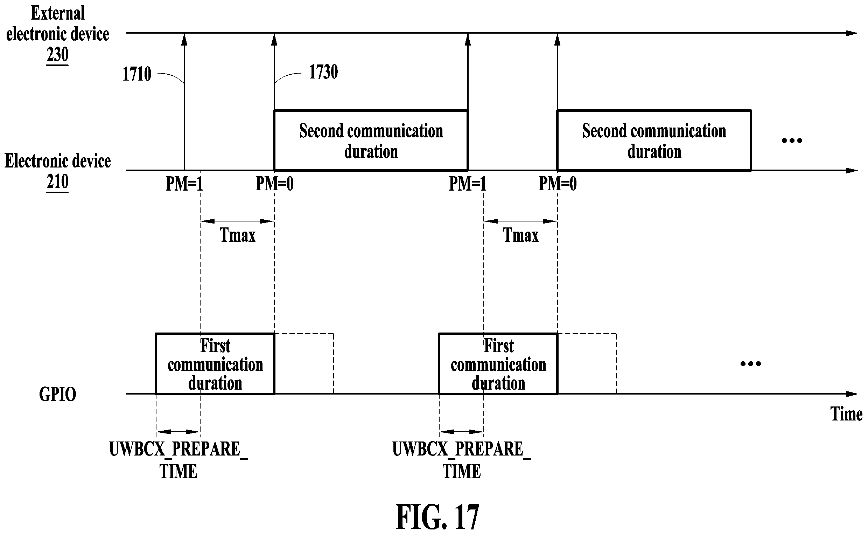

In operation 1550, when it is impossible to change the operating channel of the first communication 201, the electronic device 210 may perform the first communication 201 and the second communication 203 without changing the operating channel of the first communication 201. An operation in which the electronic device 210 performs the first communication 201 and the second communication 203 without changing the operating channel of the first communication 201 is described in detail below with reference to FIGS. 16 and 17.

FIG. 16 is a diagram illustrating an operating method of an electronic device, according to an embodiment. FIG. 16 may be a flowchart illustrating an operation of an electronic device (e.g., the electronic device 210 of FIGS. 2, 3, and 6) for performing first communication (e.g., the first communication 201 of FIG. 2) and second communication (e.g., the second communication 203 of FIG. 2) by changing the duration of the first communication 201 and the interval of the first communication 201.

Referring to FIG. 16, according to an embodiment, operations 1610 to 1650 may be performed sequentially but are not limited thereto. For example, two or more operations may be performed in parallel.

In operation 1610, when it is impossible to change an operating channel of the first communication 201, the electronic device 210 may verify whether the duration and/or interval of the first communication 201 is capable of being changed. For example, a second communication service module (e.g., the second communication service module 314 of FIG. 3) may transmit the allowable duration and/or interval of the first communication 201 to a first communication service module (e.g., the first communication service module 312 of FIG. 3). The second communication service module 314 may determine the allowable duration and/or interval of the first communication 201 based on information (e.g., information such as the latency required for a second application and/or the traffic associated with a second application) about a second application (e.g., an application that uses the second communication). The first communication service module 312 may determine whether the duration and interval of the first communication 201 received from the second communication service module 314 are applicable. For example, the first communication service module 312 may determine whether the duration and interval of the first communication 201 received from the second communication service module 314 are applicable based on information (e.g., information such as the type of a first application) about a first application that uses the first communication 201. When it is impossible to change the duration and/or interval of the first communication 201, the electronic device 210 may perform power management of a link (e.g., an overlapping channel) including a channel that overlaps the operating channel of the first communication 201 based on the QoS required for the second application. An operation in which the electronic device 210 performs power management of the link including the overlapping channel based on the QoS of the second application is described in detail below with reference to FIG. 17.

In operation 1630, the electronic device 210 may change the duration and interval of the first communication 201 and perform the first communication 201 and the second communication 203.

FIG. 17 is a diagram illustrating an operating method of an electronic device, according to an embodiment. FIG. 17 may be a flowchart illustrating an operation of an electronic device (e.g., the electronic device 210 of FIGS. 2, 3, and 6) for performing power management of a link (e.g., an overlapping channel) including an operating channel of first communication (e.g., the first communication 201 of FIG. 2) based on the QoS required for a second application that uses second communication (e.g., the second communication 203 of FIG. 2).

Referring to FIG. 17, according to an embodiment, in operation 1710, the electronic device 210 may transmit, to the external electronic device 230, a first frame (e.g., a data null frame) to control the link including the overlapping channel. Operation 1710 may be substantially the same as operation 1210 of FIG. 12. Accordingly, a repeated description thereof is omitted.

In operation 1730, the electronic device 210 may transmit a second frame to control the link including the overlapping channel. The electronic device 210 may calculate the maximum duration Tmax of the first communication 201 that may satisfy the QoS required for the second application. When the maximum duration Tmax of the first communication elapses since the first communication 201 is initiated, the electronic device 210 may terminate the first communication 201 and change a GPIO (e.g., the GPIO 341 of FIG. 6) to a low state. When the GPIO 341 is changed to a low state, the electronic device 210 may transmit the second frame to the external electronic device 230. The second frame may include information (e.g., a PM bit) for power management of the link including the overlapping channel. For example, the electronic device 210 may transmit the second frame including the PM bit, which has a value of 0, to the external electronic device 230. The external electronic device 230 may receive the second frame and change the link including the overlapping channel to a wake-up mode.

According to an embodiment, the electronic device 210 may execute a first application (e.g., an application that uses the first communication 201) and the second application in parallel by performing the first communication 201 and the second communication 203 based on the QoS required for the second application.

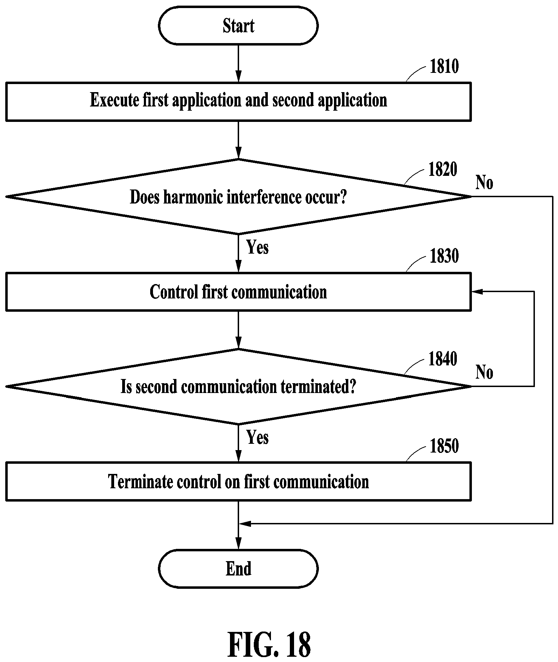

FIG. 18 is a flowchart illustrating an operating method of an electronic device, according to an embodiment. FIG. 18 may be a diagram illustrating a communication control method based on harmonic interference.

Referring to FIG. 18, according to an embodiment, operations 1810 to 1850 may be performed sequentially but are not limited thereto. For example, two or more operations may be performed in parallel.

In operation 1810, an electronic device (e.g., the electronic device 210 of FIGS. 2, 3, and 6) may execute a first application and a second application. The first application may include an application that uses first communication (e.g., the first communication 201 of FIG. 2). The second application may include an application that uses second communication (e.g., the second communication 203 of FIG. 2).

In operation 1820, the electronic device 210 may verify whether harmonic interference occurs between the first communication 201 and the second communication 203. For example, the electronic device 210 may verify whether the second communication 203 is interfered with by the first communication 201.

In operation 1830, when harmonic interference is verified, the electronic device 210 may control the first communication 201. For example, the electronic device 210 may perform the link control (e.g., the MLO link control) on the first communication 201. The link control method may be substantially the same as the link control method described above with reference to FIGS. 12 to 14. Accordingly, a repeated description thereof is omitted. The electronic device 210 may control power (e.g., Tx power) of an antenna associated with harmonic interference among antennas (e.g., one or more of the antennas 351 to 357 of FIG. 3) used for the first communication 201. For example, the electronic device 210 may perform the control such as power backoff.

In operation 1840, the electronic device 210 may verify whether the second communication 203 is terminated. For example, the electronic device 210 may verify whether the second application that uses the second communication 203 is terminated.

In operation 1850, when the second communication 203 is terminated, the electronic device 210 may terminate the control (e.g., the MLO link control and/or Tx power backoff) on the first communication 201.

According to an embodiment, the electronic device 210 may improve communication quality by performing the control on the first communication 201 based on harmonic interference between the first communication 201 and the second communication 203.

According to an embodiment, an electronic device 101, 210 includes one or more wireless communication modules 192, 332, 334 configured to transmit and receive a wireless signal, one or more processors 120, 310 operatively connected to the wireless communication modules 192, 332, 334, and a memory electrically connected to the processors 120, 310 and including instructions executable by the processors 120, 310. When the instructions are executed by the processors 120, 310, the processors 120, 310 are configured to perform a plurality of operations, in which the plurality of operations includes executing a first application that uses first communication 201 not supporting a multi-link operation (MLO) and a second application that uses second communication 203 supporting an MLO. The plurality of operations includes, based on information about a plurality of links associated with the second communication 203, transmitting data associated with the second application through one or more first links among the plurality of links. The plurality of operations includes controlling, among the first links, a second link including a bandwidth overlapping an operating channel of the first communication 201.

The first communication 201 may include at least one of Bluetooth (BT), Bluetooth low energy (BLE), ZigBee, and ultra-wideband (UWB). The second communication 203 may include wireless fidelity (Wi-Fi).

The executing may include executing the second application while executing the first application. The executing may include executing the first application while executing the second application.

The transmitting may include mapping, to the first links, one or more traffic identifiers (TIDs) for the data based on at least one of a throughput of the plurality of links and latency of the plurality of links.

The mapping may include mapping a first TID among the TIDs to the first links based on a comparison result between the throughput of the plurality of links and a threshold value.

The mapping may include mapping a second TID among the TIDs to one of the first links based on a comparison result between first latency of the plurality of links and second latency determined based on an access category corresponding to the second application.

The controlling may include transmitting a frame including information for power management of the second link to an external electronic device 230 performing the second communication 203 with the electronic device 101, 210.

The transmitting to the external electronic device may include transmitting, to the external electronic device 230, a first frame including information for changing the second link to a sleep mode based on duration of the first communication 201 and an interval of the first communication 201. The transmitting to the external electronic device may include transmitting, to the external electronic device 230, a second frame including information for changing the second link to a wake-up mode based on a time point at which the first communication 201 is terminated.

The controlling may include determining time-wake-time (TWT) service parameters for the second link based on the duration of the first communication 201 and the interval of the first communication 201. The controlling may include transmitting a frame including the TWT service parameters to an external electronic device 230.

The TWT service parameters may include a first parameter regarding an initiation time of a TWT service, a second parameter regarding a cycle of a TWT service, and a third parameter regarding duration of a TWT service.

According to an embodiment, an operating method of an electronic device 101, 210 includes executing a first application that uses first communication 201 not supporting an MLO and a second application that uses second communication 203 supporting an MLO. The operating method may include, based on information about a plurality of links associated with the second communication 203, transmitting data associated with the second application through one or more first links among the plurality of links. The operating method may include controlling, among the first links, a second link including a bandwidth overlapping an operating channel of the first communication 201.

The first communication 201 may include at least one of BT, BLE, ZigBee, and UWB. The second communication 203 may include Wi-Fi.

The executing may include executing the second application while executing the first application. The executing may include executing the first application while executing the second application.

The transmitting may include mapping, to the first links, one or more TIDs for the data based on at least one of a throughput of the plurality of links and latency of the plurality of links.

The mapping may include mapping a first TID among the TIDs to the first links based on a comparison result between the throughput of the plurality of links and a threshold value.

The mapping may include mapping a second TID among the TIDs to one of the first links based on a comparison result between first latency of the plurality of links and second latency determined based on an access category corresponding to the second application.

The controlling may include transmitting a frame including information for power management of the second link to an external electronic device 230 performing the second communication 203 with the electronic device 101, 210.

The transmitting to the external electronic device may include transmitting, to the external electronic device 230, a first frame including information for changing the second link to a sleep mode based on duration of the first communication 201 and an interval of the first communication 201. The transmitting to the external electronic device may include transmitting, to the external electronic device 230, a second frame including information for changing the second link to a wake-up mode based on a time point at which the first communication 201 is terminated.

The controlling may include determining TWT service parameters for the second link based on the duration of the first communication 201 and the interval of the first communication 201. The controlling may include transmitting a frame including the TWT service parameters to an external electronic device 230.

The TWT service parameters may include a first parameter regarding an initiation time of a TWT service, a second parameter regarding a cycle of a TWT service, and a third parameter regarding duration of a TWT service.

The electronic device according to the embodiments disclosed herein may be one of various types of electronic

EP 4 557 873 A1

devices. The electronic device may include, for example, a portable communication device (e.g., a smart phone), a computer device, a portable multimedia device, a portable medical device, a camera, a wearable device, or a home appliance device. According to an embodiment of the disclosure, the electronic device is not limited to those described above.

It should be appreciated that embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, "A or B", "at least one of A and B", "at least one of A or B", "A, B or C", "at least one of A, B and C", and "at least one of A, B, or C," each of which may include any one of the items listed together in the corresponding one of the phrases, or all possible combinations thereof. Terms, such as "first" or "second", are simply used to distinguish a component from another component and do not limit the components in other aspects (e.g., importance or sequence). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., by wire), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more of functions. For example, according to an embodiment, the module may be implemented in a form of an application-specific integrated circuit (ASIC).

An embodiment as set forth herein may be implemented as software (e.g., the program 140) including one or more instructions that are stored in a storage medium (e.g., an internal memory 136 or an external memory 138) that is readable by a machine (e.g., the electronic device 101, 210). For example, a processor (e.g., the processor 120, 310) of the machine (e.g., the electronic device 101, 210) may invoke at least one of the one or more instructions stored in the storage medium and execute it. This allows the machine to be operated to perform at least one function according to the at least one instruction invoked. The one or more instructions may include code generated by a compiler or code executable by an interpreter. The machine-readable storage medium may be provided in the form of a non-transitory storage medium. Here, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to embodiments of the disclosure may be included and provided in a computer program product. The computer program product may be traded as a product between a seller and a buyer. The computer program product may be distributed in the form of a machine-readable storage medium (e.g., a compact disc read-only memory (CD-ROM)), or be distributed (e.g., downloaded or uploaded) online via an application store (e.g., PlayStore™), or between two user devices (e.g., smartphones) directly. If distributed online, at least part of the computer program product may be temporarily generated or at least temporarily stored in the machine-readable storage medium, such as a memory of the manufacturer's server, a server of the application store, or a relay server.

According to an embodiment, each component (e.g., a module or a program) of the above-described components may include a single entity or multiple entities, and some of the multiple entities may be separately disposed in different components. According to embodiments, one or more of the above-described components or operations may be omitted, or one or more other components or operations may be added. Alternatively or additionally, a plurality of components (e.g., modules or programs) may be integrated into a single component. In such a case, according to various embodiments, the integrated component may still perform one or more of functions of each of the plurality of components in the same or similar manner as they are performed by a corresponding one of the plurality of components before the integration. According to embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device 101, 210 comprising:

    one or more wireless communication modules 192, 332, 334 configured to transmit and receive a wireless signal;
    one or more processors 120, 310 operatively connected to the wireless communication modules 192, 332, 334; and
    a memory electrically connected to the processors 120, 310 and comprising instructions executable by the

17

processors 120, 310,

wherein, when the instructions are executed by the processors 120, 310, the processors 120, 310 are configured to perform a plurality of operations,

wherein the plurality of operations comprises:

executing a first application that uses first communication 201 not supporting a multi-link operation (MLO) and a second application that uses second communication 203 supporting an MLO;

based on information about a plurality of links associated with the second communication 203, transmitting data associated with the second application through one or more first links among the plurality of links; and

controlling, among the first links, a second link comprising a bandwidth overlapping an operating channel of the first communication 201.

2. The electronic device 101, 210 of claim 1, wherein

the first communication 201 comprises at least one of Bluetooth (BT), Bluetooth low energy (BLE), ZigBee, and ultra-wideband (UWB), and

the second communication 203 comprises wireless fidelity (Wi-Fi).

3. The electronic device 101, 210 of one of claims 1 and 2, wherein the executing comprises:

executing the second application while executing the first application; and

executing the first application while executing the second application.

4. The electronic device 101, 210 of one of claims 1 to 3, wherein the transmitting comprises mapping, to the first links, one or more traffic identifiers (TIDs) for the data based on at least one of a throughput of the plurality of links and latency of the plurality of links.

5. The electronic device 101, 210 of one of claims 1 to 4, wherein the mapping comprises mapping a first TID among the TIDs to the first links based on a comparison result between the throughput of the plurality of links and a threshold value.

6. The electronic device 101, 210 of one of claims 1 to 5, wherein the mapping comprises mapping a second TID among the TIDs to one of the first links based on a comparison result between first latency of the plurality of links and second latency determined based on an access category corresponding to the second application.

7. The electronic device of one of claims 1 to 6, wherein the controlling comprises transmitting a frame comprising information for power management of the second link to an external electronic device 230 performing the second communication 203 with the electronic device 101, 210.

8. The electronic device of one of claims 1 to 7, wherein the transmitting to the external electronic device comprises:

transmitting, to the external electronic device 230, a first frame comprising information for changing the second link to a sleep mode based on duration of the first communication 201 and an interval of the first communication 201; and

transmitting, to the external electronic device 230, a second frame comprising information for changing the second link to a wake-up mode based on a time point at which the first communication 201 is terminated.

9. The electronic device of one of claims 1 to 8, wherein the controlling comprises:

determining time-wake-time (TWT) service parameters for the second link based on the duration of the first communication 201 and the interval of the first communication 201; and

transmitting a frame comprising the TWT service parameters to an external electronic device 230.

10. The electronic device of one of claims 1 to 9, wherein the TWT service parameters comprise a first parameter regarding an initiation time of a TWT service, a second parameter regarding a cycle of a TWT service, and a third parameter regarding duration of a TWT service.

11. An operating method of an electronic device 101, 210, the operating method comprising:

executing a first application that uses first communication 201 not supporting a multi-link operation (MLO) and a second application that uses second communication 203 supporting an MLO;

based on information about a plurality of links associated with the second communication 203, transmitting data associated with the second application through one or more first links among the plurality of links; and

controlling, among the first links, a second link comprising a bandwidth overlapping an operating channel of the first communication 201.

12. The operating method of claim 11, wherein

the first communication 201 comprises at least one of Bluetooth (BT), Bluetooth low energy (BLE), ZigBee, and ultra-wideband (UWB), and

the second communication 203 comprises wireless fidelity (Wi-Fi).

13. The operating method of one of claims 11 and 12, wherein the executing comprises:

executing the second application while executing the first application; and

executing the first application while executing the second application.

14. The operating method of one of claims 11 to 13, wherein the transmitting comprises mapping, to the first links, one or more traffic identifiers (TIDs) for the data based on at least one of a throughput of the plurality of links and latency of the plurality of links.

15. The operating method of one of claims 11 to 14, wherein the mapping comprises mapping a first TID among the TIDs to the first links based on a comparison result between the throughput of the plurality of links and a threshold value.

FIG. 1

EP 4 557 873 A1

External electronic device
**250**

— 201

Electronic device
**210**

203

External electronic device
**230**

# FIG. 2

210

Processor 310

| Second communication service module 314 | First communication service module 312 |

343    341

Second communication module 334

First communication module 332

345

SPDT — 360

351    353    355    357

FIG. 3

EP 4 557 873 A1

| First communication duration | First communication duration | First communication duration | • • • |

Time

First communication interval

## FIG. 4

UWBCX_PREPARE_TIME

GPIO **341**

HIGH

| Preparation time | First communication |

LOW

GPIO **343**

HIGH

| Second communication | | Second communication |

LOW

## FIG. 5

FIG. 6

EP 4 557 873 A1

Start

↓

Execute first application and second application /710

↓

Perform TID-to-link mapping based on information about second application /730

↓

Control link including bandwidth that overlaps operating channel of first communication /750

↓

End

**FIG. 7**

First communication service module 312

Second communication service module 314

Execute first application 810

Determine operating channel of first communication 830

850

Determine overlapping channel 870

Determine whether link allocation is possible 890

**FIG. 8**

Start

910

Obtain throughput and latency of links

930

Obtain traffic associated with second application and latency required for second application

950

Determine whether link allocation is possible

End

**FIG. 9**

Start

1010

Obtain throughput of links

1030

Perform TID-to-link mapping based on comparison result between throughput of links and threshold value

End

**FIG. 10**

```
                    ┌─────────────────┐
                    │      Start      │
                    └─────────────────┘
                             │
                             ▼                              ⌐1110
┌─────────────────────────────────────────────────────────────────┐
│    Obtain latency of links and latency required for second        │
│                         application                               │
└─────────────────────────────────────────────────────────────────┘
                             │
                             ▼                              ⌐1130
┌─────────────────────────────────────────────────────────────────┐
│  Perform TID-to-link mapping based on latency of links and        │
│         latency required for second application                   │
└─────────────────────────────────────────────────────────────────┘
                             │
                             ▼
                    ┌─────────────────┐
                    │       End       │
                    └─────────────────┘
```

# FIG. 11

External electronic device **230**

Electronic device **210**

1210 ⌐ 　　　　⌐ 1230　　　　•••

PM=1　　　PM=0　　　PM=1　　　PM=0

GPIO

First communication duration　　　First communication duration　•••

Time

←UWBCX_PREPARE_
TIME　　　←UWBCX_PREPARE_
TIME

First communication interval

**FIG. 12**

FIG. 13

EP 4 557 873 A1

External
electronic device
**230**

Electronic device
**210**

1430

1460

PM=1

PM=0

Second communication
service module
**314**

Accept

Accept

Time

First communication
service module
**312**

1410

1420

1440

1450

First communication
duration

First communication
duration

COEX
Request=1

COEX
Request=0

Time

First communication interval

**FIG. 14**

EP 4 557 873 A1

Start

1510
Execute first application and
second application

1520
Is coexistence operation possible? — Yes — To Operation 730

No

1530
Is it possible to
change operating channel of first
communication? — No

Yes

1540
Perform first communication and second
communication by changing operating channel

1550
Perform first communication and
second communication without
changing operating channel

End

FIG. 15

Start

1610

Is it possible to
change duration and/or interval of
first communication?

No → To Operation 730

Yes

1630

Change duration and interval of first communication and perform
first communication and second communication

End

FIG. 16

FIG. 17

Start

1810
Execute first application and second application

1820
Does harmonic interference occur? — No

Yes

1830
Control first communication

1840
Is second communication terminated? — No

Yes

1850
Terminate control on first communication

End

# FIG. 18

## INTERNATIONAL SEARCH REPORT

| International application No. |
|---|
| **PCT/KR2023/011451** |

**A. CLASSIFICATION OF SUBJECT MATTER**

**H04W 76/15**(2018.01)i; **H04W 28/02**(2009.01)i; **H04W 52/02**(2009.01)i; **H04W 4/80**(2018.01)i; **H04W 84/12**(2009.01)i; **H04W 88/06**(2009.01)i

According to International Patent Classification (IPC) or to both national classification and IPC

**B. FIELDS SEARCHED**

Minimum documentation searched (classification system followed by classification symbols)

H04W 76/15(2018.01); H04W 16/10(2009.01); H04W 28/06(2009.01); H04W 4/06(2009.01); H04W 52/02(2009.01); H04W 72/04(2009.01); H04W 74/08(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: MLO(multi-link operation), TID(traffic identifier), bluetooth, WiFi, mapping, frequency, overlap

**C. DOCUMENTS CONSIDERED TO BE RELEVANT**

| Category* | Citation of document, with indication, where appropriate, of the relevant passages | Relevant to claim No. |
|---|---|---|
| Y | US 2020-0163141 A1 (MEDIATEK INC.) 21 May 2020 (2020-05-21)<br>See paragraphs [0027]-[0072]; claim 1; and figures 1, 3 and 11. | 1-3,11-13 |
| A | | 4-10,14-15 |
| Y | US 2021-0409958 A1 (INTEL CORPORATION) 30 December 2021 (2021-12-30)<br>See paragraph [0035]; and figure 1. | 1-3,11-13 |
| A | US 2022-0132611 A1 (ZTE CORPORATION) 28 April 2022 (2022-04-28)<br>See paragraphs [0100]-[0175]; and figures 4-10. | 1-15 |
| A | US 2021-0212118 A1 (MEDIATEK SINGAPORE PTE. LTD.) 08 July 2021 (2021-07-08)<br>See paragraphs [0092]-[0120]; and figures 15-17. | 1-15 |
| A | WO 2020-032633 A1 (LG ELECTRONICS INC.) 13 February 2020 (2020-02-13)<br>See paragraphs [0258]-[0273]; and figures 25-26. | 1-15 |

☐ Further documents are listed in the continuation of Box C.　　☑ See patent family annex.

| | |
|---|---|
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **27 October 2023** | **13 November 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.

**PCT/KR2023/011451**

| Patent document cited in search report | | | Publication date (day/month/year) | Patent family member(s) | | | Publication date (day/month/year) |
|---|---|---|---|---|---|---|---|
| US | 2020-0163141 | A1 | 21 May 2020 | EP | 3654703 | A1 | 20 May 2020 |
| | | | | TW | 202025848 | A | 01 July 2020 |
| | | | | TW | 202226884 | A | 01 July 2022 |
| | | | | TW | I761727 | B | 21 April 2022 |
| | | | | TW | I777901 | B | 11 September 2022 |
| | | | | US | 11153921 | B2 | 19 October 2021 |
| US | 2021-0409958 | A1 | 30 December 2021 | US | 11051174 | B2 | 29 June 2021 |
| | | | | US | 11683694 | B2 | 20 June 2023 |
| | | | | US | 2020-0045555 | A1 | 06 February 2020 |
| US | 2022-0132611 | A1 | 28 April 2022 | CN | 114208388 | A | 18 March 2022 |
| | | | | EP | 3997955 | A1 | 18 May 2022 |
| | | | | EP | 3997955 | A4 | 20 July 2022 |
| | | | | US | 2022-0132423 | A1 | 28 April 2022 |
| | | | | WO | 2021-003700 | A1 | 14 January 2021 |
| | | | | WO | 2021-004052 | A1 | 14 January 2021 |
| | | | | WO | 2021-004079 | A1 | 14 January 2021 |
| | | | | WO | 2021-179521 | A1 | 16 September 2021 |
| US | 2021-0212118 | A1 | 08 July 2021 | CN | 113068214 | A | 02 July 2021 |
| | | | | EP | 3846574 | A1 | 07 July 2021 |
| | | | | EP | 3846574 | B1 | 18 October 2023 |
| | | | | TW | 202130219 | A | 01 August 2021 |
| | | | | TW | I789667 | B | 11 January 2023 |
| WO | 2020-032633 | A1 | 13 February 2020 | US | 11723094 | B2 | 08 August 2023 |
| | | | | US | 2021-0315036 | A1 | 07 October 2021 |

Form PCT/ISA/210 (patent family annex) (July 2022)